**Europäisches Patentamt**

**European Patent Office**

**Office européen des brevets**

(11) Publication number: **0 145 839**
**B1**

(12) **EUROPEAN PATENT SPECIFICATION**

(45) Date of publication of patent specification: **28.10.87**

(21) Application number: **84109702.5**

(22) Date of filing: **15.08.84**

(51) Int. Cl.⁴: **B 29 B 9/10**

(54) Device for extruding flowable substances.

(30) Priority: **02.11.83 CA 440256**

(43) Date of publication of application:
**26.06.85 Bulletin 85/26**

(45) Publication of the grant of the patent:
**28.10.87 Bulletin 87/44**

(84) Designated Contracting States:
**BE DE FR GB NL**

(56) References cited:
**EP-B-0 012 192**
**DE-C-1 767 381**
**GB-A- 889 628**
**US-A-2 653 350**
**US-A-3 337 913**

(73) Proprietor: **Santrade Ltd.**
**Alpenquai 12 P.O. Box 321**
**CH-6002 Luzern (CH)**

(72) Inventor: **Froeschke, Reinhard**
**Pestalozzistrasse 7**
**D-7056 Weinstadt 2 (DE)**

(74) Representative: **Wilhelm, Hans-Herbert, Dr.-Ing.**
**et al**
**Wilhelm & Dauster Patentanwälte**
**Hospitalstrasse 8**
**D-7000 Stuttgart 1 (DE)**

Courier Press, Leamington Spa, England.

## Description

The invention concerns a device for extruding flowable substances from two cylindrical containers, of which the first is provided with openings on its periphery and is rotatable about the outer wall of a cylindrical inner container to which the substance to be extruded is axially fed and, through a row of openings which, during relative rotation of the two cylindrical containers coincide cyclically with the openings of the outer container, falls in drop form onto a conveyor or cooling belt, which is arranged below it, and solidifies or gelatinizes there.

Devices of this type are known (EP—A 12 192). The row of openings, provided with the known constructions in the there stationary inner container, has specific dimensions, so that it becomes necessary in each case for dropping various substances to always select the temperature, necessary for dropping, of the substance and therewith its viscosity in such a way that the dropping takes place in the desired manner. It was found that the use of known extrusion devices of the previously noted type is somewhat limited due to this design, because the temperature cannot always be set with all substances in such a way that the desired viscosity is attained, which yield the desired drop-shape with the opening dimensions, given in advance, for passage of the substance.

It is, therefore, the object of the invention, with devices of the above-noted type, to find an adapting possibility, which goes beyond this, to the material to be dropped in order to increase the range of application of devices for extruding flowable substances with two cylinders which can be turned relative to one another.

The invention consists, with a construction of the above-noted type, in that the row of openings are provided in a nozzle bar which can be attached to the periphery of the inner container. This design has the advantage that various nozzle bars can be provided whose form is different in each case and is suitable for various applications. The adaptability to various materials is thus increased without the cost of construction for a so-called rotor drop shaper becoming too great.

It is practical if the nozzle bar is formed straight and inserted parallel to the axis of rotation of the cylindrical containers, which can be accomplished if the nozzle bar is inserted in a groove on the inner container.

It is thereby advantageous for certain areas of application if the groove has parallel walls, so that the bar is led in radial direction, freely moving on the inner container and is held by the outer cylinder which surrounds the inner container. The nozzle bar is pressed, with this design, under the pressure of the substance to be extruded, against the outer container and in this way gives a tight and good guide as well as a sufficient stripping effect. This embodiment is particularly suitable for low-viscous substances, with which the extrusion pressure can still be maintained relatively low, so that the contact pressure of the nozzle bar against the rotating cylinder, which is located on the outside, cannot lead to an increased wear, not to mention to a deformation of the outer cylinder.

For use with high-viscous substances, on the other hand, a construction has proven itself advantageous with which the nozzle bar is axially inserted, in a form-locking manner, into a guide on the inner container. This groove, which serves to guide the nozzle bar, can, for example, have a T-shaped cross-section to which the outer shape of the nozzle bar is adapted. With this embodiment, the considerably higher pressure, which is used for extruding the high-viscous substances, and the forces exerted thereby on the nozzle bar are absorbed by the inner container. The nozzle bar is therefore, not pressed with too great a force against the inner wall of the outer cylindrical container, so that the operability is not adversely affected.

In order to attain a fine-tuning of the viscosity of the substances to be extruded, it is, moreover, advantageous if the nozzle bar itself is heated or cooled, so that, in addition to the tempering device already present in the inner container for the substance to be extruded, yet another tempering device is provided in the area in which the substance is pressed outward through relatively small openings.

For this purpose, the nozzle bar can have a heating or cooling coil which for practical purposes is placed on both sides of the row of openings, so that a very sensitive temperature control is possible if this additional heating or cooling coil is regulated in its temperature, which can be easily accomplished. In this way, the substance to be extruded can still be exactly tempered until shortly before its discharge, so that excellent dropping results can be achieved with this new embodiment.

In order to attach the nozzle bar to the inner container, be it, therefore, in order to press it radially from the outside into the groove, as is the case with low-viscous substances, be it, in order to insert it axially into the groove, which is furnished with form-locking guides, as is provided during processing of high-viscous substances, it is very beneficial if the outer container is made so that it can be easily removed axially from the inner container, which can be attained by a suitable support structure on the side turned away from the rotating drive.

Additional features and advantages of the invention as defined in the claims are shown in the embodiments of the invention, which are explained in the following description and illustrated with reference to the drawings, showing:

Fig. 1 a schematic view of a new device, made in the form of a so-called rotor drop shaper, for extruding flowable substances,

Fig. 2 the schematic section through this rotor drop shaper cut in direction of the line II—II, however, without the parts still present behind the sectional plane, in a construction which is used for dropping high-viscous substances,

Fig. 2a a perspective partial representation of the nozzle bar inserted into the inner container of Fig. 2,

Fig. 3 the section similar to Fig. 2, however, with a construction which is used for dropping low-viscous substances,

Fig. 3a a perspective partial view of the nozzle bar inserted into the inner container of Fig. 3,

Fig. 4 a schematic longitudinal section through the inner container of the rotor drop shaper of Fig. 1 with a construction for low-viscous substances in accordance with Fig. 3,

Fig. 5 the inner container of the rotor drop shaper of Fig. 1, however, for a construction for high-viscous substances in accordance with Fig. 2,

Fig. 6 the filler which can be axially inserted into the inner container of Fig. 5,

Fig. 7 the cross-section of the filler of Fig. 6,

Fig. 8 a schematic partial section through a rotor drop shaper similar to Fig. 1, however, with an inserted nozzle bar with an additional heating, and

Fig. 9 the top view of the nozzle bar of Fig. 8 in a partial section through the rotor drop shaper of Fig. 8.

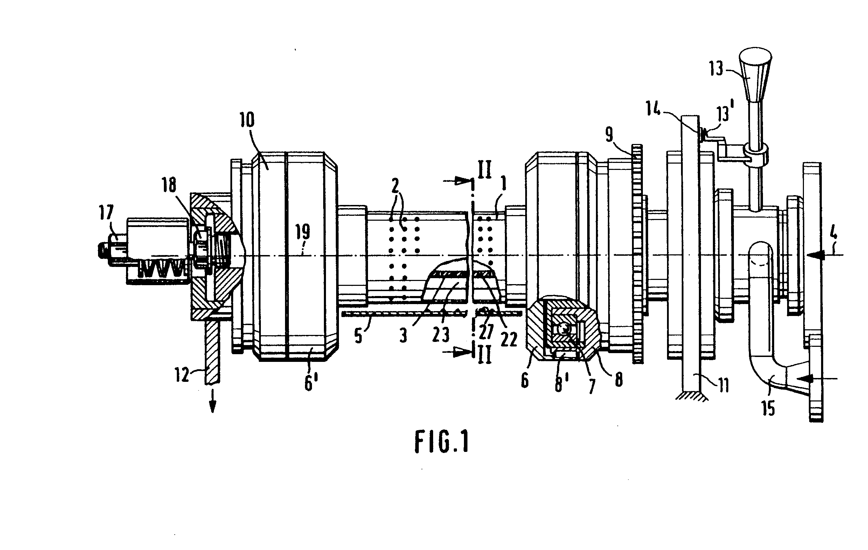

In Fig. 1, a so-called rotor drop shaper is schematically illustrated whose actual part, made for dropping flowable substances, consists of an outer cylindrical container 1, provided with openings 2 on its periphery, in tubular shape, and of an inner container 3, which is provided inside this cylindrical container 1, into which the substance to be dropped is axially fed in direction of the arrow 4 and radially pressed out through a row of openings, which will be described in detail later, and which, in each case, coincide cyclically on the downward turned side with the openings 2 of the outer container 1, which turns relative to the inner container 3. Below the two counter-rotating cylindrical containers 1 and 3, a conveyor or cooling belt 5 is provided which runs vertically to the drawing plane in the representation of Fig. 1 and which is led through by guide devices below the two containers 1 and 3, which is not shown in greater detail. In the illustration of Fig. 1, both the width of the conveyor or cooling belt 5 and the length of the two cylindrical containers 1 and 3 are shown shortened; the width of belt 5 and the corresponding length of the containers 1 and 3 can be chosen according to type of use and desired production. With most rotor drop shapers, this measurement is approximately one meter.

The outer cylindrical container 1 is connected torsion-resistant at both its ends with flanges 6, 6', whereby flange 6 is fixed by way of a support 7, which is not shown in greater detail, and connected torsion-resistant, by way of an adjusting wedge 8' or the like, with a driving part 8 which, for its part, is rigidly connected with a gear wheel 9, driven in a manner which is not shown. In a similar manner, flange 6' is pivoted in a bearing part 10, which is supported in fixed bracked plates 11 or 12, just as the pivot and driving part 8, so that the rotor drop shaper assumes a defined position above the cooling or conveyor belt 5. The relative position of the inner container 3 to the conveyor or cooling belt 5 can be adjusted by way of a hand lever 13 with which the inner container can be tilted vis-à-vis its base plate 11. The set position can be read by way of an indicator 13', firmly connected with lever 13, on a scale 14 which is permanently mounted on the base plate 11. The substance, for the first part, but also a heating medium, for the second part, is fed to the interior of the inner container 3 in a direction of the arrow 4 through the conduit 15; said heating medium can again be carried off by a connection, which is not shown, on the other side. The heating medium is described in greater detail in the following. For reasons also to be clarified later, the outer container 1 can be axially removed from the inner container 3. This is accomplished in that, after unscrewing the clamping bolts 17 or 18, which are provided at the front ends, the entire bearing part, consisting of the bearing part 10 and the flange 6', can be removed toward the left with the container 1 in direction of the axis 19 of the rotor drop shaper.

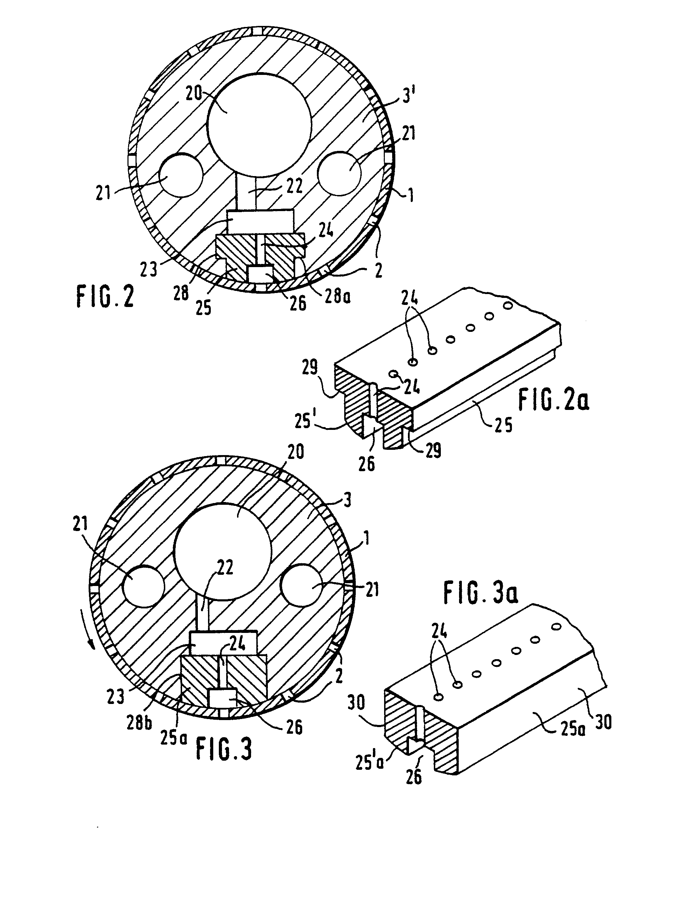

The inner structure of the actual part serving as the dropper becomes clear from Fig. 2 and Fig. 3. Fig. 2 and Fig. 3 show that the inner container 3 or 3' of the rotor drop shaper is provided with an axially running feed bore 20 for the material to be extruded, into which the substance is fed in direction of the arrow 4 of Fig. 1. This occurs under pressure. The inner container 3 or 3' is, moreover, also provided with two ducts 21, running parallel to the bore 20, in which the heating medium, preferably thermal oil, which is fed through the connection 15, is led. This heating medium is tempered by a suitable control device, situated on the outside. The substance to be extruded reaches, by way of several bores 22, into a duct 23, which runs parallel to the axis 19, and which is always open to the outside and closed by the outer cylindrical container 1 which is rotatable relative to the inner container 3. From this duct 23, the tempered substance, which is under pressure, enters, through a row of openings 24 in a nozzle bar 25, into a downward open groove 26 of the nozzle bar 25. The openings 24 and their groove 26 coincide cyclically with the openings 2, guided past them, of the outer container 1, so that the substance, which is also still under a certain pressure in the groove 26, is pressed out through the openings 2 and falls in form of drops 27 (Fig. 1) onto the cooling or conveyor belt 5 located below it. These drops subsequently solidify or gelatinize and can then be further processed.

With the construction according to Fig. 2 and Fig. 2a, which is suitable for dropping high-viscous substances, duct 23 leads into a groove 28 with T-shaped cross-section, to which the cross-section of the nozzle bar 25 is also adapted. The nozzle bar is—after axial removal of the outer container 1—axially inserted into the T-shaped groove. The device can be used after mounting the outer container 1. It has the advantage that the nozzle bar 25 is supported by its T-shaped form with the stops 29, which point to both sides, on the corresponding stops 28a of the groove 28. The extruding pressure used when dropping high-viscous substances, and the thereby resulting forces on the nozzle bar are thus absorbed by the inner container 3'. Deformation forces are not exerted on the outer container 1. The measurement of the nozzle bar are, of course, chosen in such a way that the nozzle bar fills the cross-section formed by the groove 28. The nozzle bar 25 is, for this purpose, also made slightly spherical at its underside 25', with a radius which is adjusted to the inner diameter of the container 1.

The construction of Fig. 3 is suitable for extruding low-viscous substances. Here, the nozzle bar 25a has two side walls 30, running parallel to one another, which are guided along corresponding parallel walls of the groove 28b. With this embodiment, the nozzle bar 25a is, therefore, pressed against the inner side of the outer container 1 by the pressure of the medium to be extruded, so that a very good sealing effect results between nozzle bar, whose underside 25a' is spherical again, and the outer container 1. With the extrusion of low-viscous substances, the pressures to be used are not so high that damage to the outer container 1 must be feared.

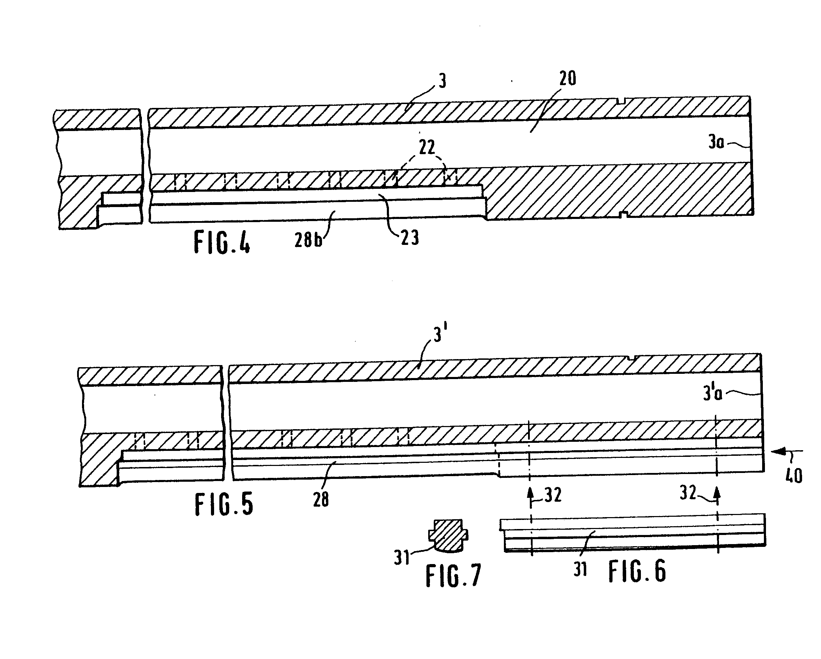

According to use of nozzle bar 25 or 25a, the inner containers 3 or 3' can also be formed differently. Fig. 4 shows the inner container 3 of Fig. 3, which has a groove 28a here with parallel walls; the nozzle bar 25a of Fig. 3 is radially inserted from the outside into this groove 28a. After mounting the outer cylindrical container 1, nozzle bar 25a is secured in the inner container 3.

With the inner container 3' of Fig. 5, groove 28 is continued axially up to the right front end 3'a of the inner container 3'. The front end 3'a of the inner container 3' and the front end 3a of the inner container 3 shown in Fig. 4 are arranged laterally inverted compared to Fig. 1. The front end 3a or 3'a always points, after installation in the rotor drop shaper of Fig. 1, to the left in direction to the two female screws 17 and 18. The insertion of the nozzle bar 25 of Fig. 2a also takes place from this side.

Consequently, the nozzle bar 25 is inserted in direction of the arrow 40 in Fig. 5. After insertion, it is secured in its position in that the filler 31 is also added in direction of the arrow 30 and then, as schematically indicated by arrows 32, secured in its axial position by screwing.

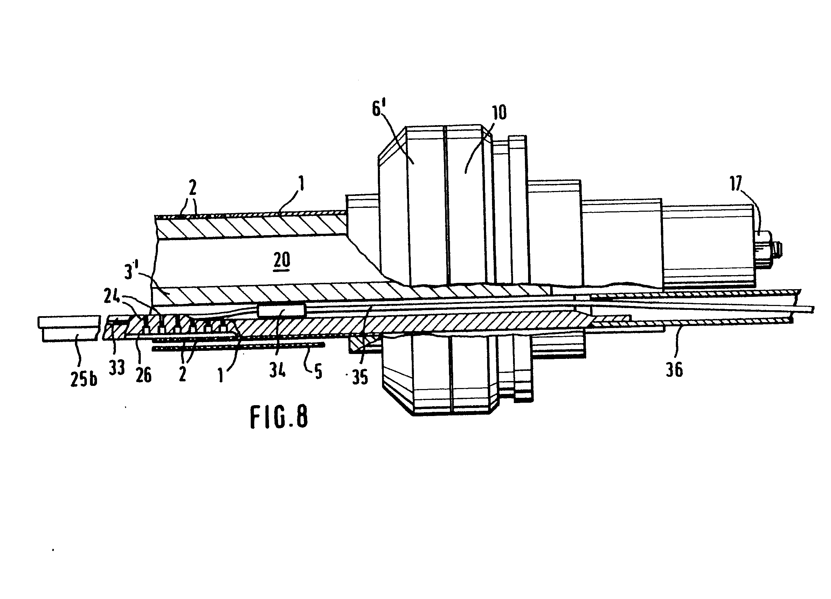

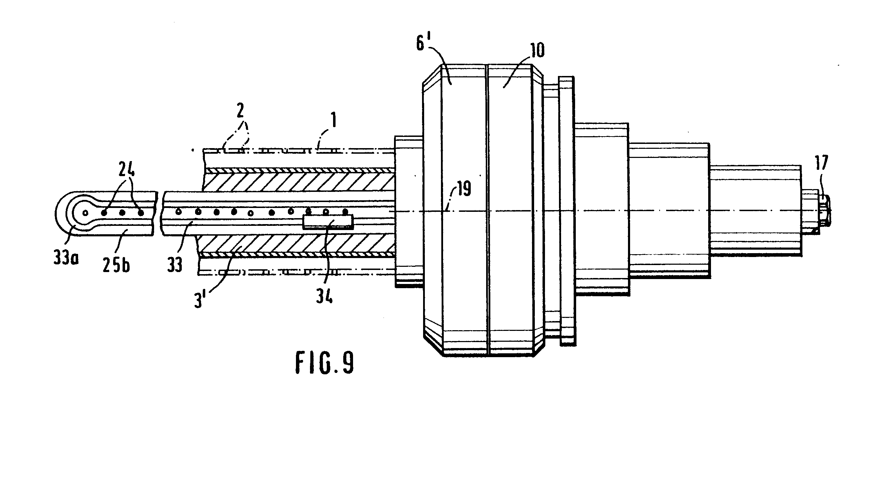

In Figs. 8 and 9, as in Figs. 2 and 2a, a nozzle bar 25b, which has a T-shaped cross-section and is guided in a corresponding groove 28 in the inner container 3', is axially inserted into the inner container 3'. However, nozzle bar 25b has an electric heating coil 33, which is placed on both sides of the row of openings 24 in the area of the upper side of nozzle bar 25b and is provided, by a connecting piece 34, with connecting pipes 35, which are led outward by way of a pipe 36 and which are provided there with a control mechanism, which is not illustrated, for monitoring and controlling the temperature in the area of the nozzle bar 25b. The connecting piece 34 can also contain suitable thermometer probes. The heating coil 33 is laid equidistantly on both sides of the openings 24 and is turned U-shaped in the end area 33a. This design enables a very sensitive temperature control for the substances to be extruded directly in the area of the row of openings 24. Even the nozzle bar 25b can be, moreover, axially removed from the inner container 3' and, if necessary, replaced. As a result of the temperature influences, which are possible, until just before the discharge of the drops, a trouble-free operation can also be maintained for flowable substances whose viscosity is very temperature dependent.

**Claims**

1. Device for extruding flowable substances from two cylindrical containers, of which the first is provided with openings on its periphery and is rotatable about the outer wall of a cylindrical inner container to which the substance to be extruded is axially fed and, through a row of openings which, with the relative rotation of the two cylindrical containers, coincide cyclically with the openings of the outer container, falls in the form of drops onto a conveyor or cooling belt, arranged below it, and solidifies or gelatinizes there, characterized in that the row of openings (24) is provided in a nozzle bar (25, 25a, 25b) which can be attached to the periphery of the inner container (3, 3').

2. Device according to claim 1, characterized in that the nozzle bar (25, 25a, 25b) is straight and is inserted parallel to the axis of rotation (19) of the cylindrical container (1, 3, 3').

3. Device according to claims 1 and 2, characterized in that the nozzle bar (25, 25a, 25b) is inserted into a groove (28, 28a) on the inner container (3, 3') and is adjusted, with its outer contour (25') situated at the open side of the groove (28), to the periphery of the inner container (3, 3').

4. Device according to claim 3, characterized in that the groove (28) has parallel walls and the nozzle bar (25a) is held, with its outer contour (25a'), on the inner circumference of the outer cylindrical container (1).

5. Device according to claim 3, characterized in that the groove (28) is provided with a narrowing wall part (28a) toward its open side and that the nozzle bar (25), which is adjusted to the cross-section of the groove (28), is kept form-locked in the groove (28).

6. Device according to claim 5, characterized in that the groove (28) has a T-shaped cross-section and the nozzle bar (25) is adapted to this cross-section.

7. Device according to claim 1, characterized in that the nozzle bar (25b) is provided with a tempering device (33).

8. Device according to claim 7, characterized in that the tempering device (33) is placed on both sides of the row of openings (24).

9. Device according to claims 7 and 8, characterized in that the nozzle bar (25b) is provided with a heating coil (33) which is placed in a U-shaped manner in the area of the openings (24).

10. Device according to one of the claims 1 to 9, characterized in that the outer container (1) can be axially removed from the inner container (3, 3'), so that the groove (28, 28a) is freed for insertion of the nozzle bar (25, 25a, 25b).

## Patentansprüche

1. Vorrichtung zum Auspressen von fließfähigen Massen auz zwei zylindrischen Behältern, von denen der erste auf seinem Umfang mit Durchtrittsöffnungen versehen und drehbar an der Außenwand eines zylindrischen Innenbehälters geführt ist, dem die auszupressende Masse axial zugeführt wird und durch eine Reihe von Öffnungen, die bei der Relativdrehung der beiden zylindrischen Behälter mit den Durchtrittsöffnungen des äußeren Behälters zyklisch zur Deckung kommen, in Tropfenform aus ein darunter angeordneten Transport- oder Kühlband fällt und dort erstarrt oder geliert, dadurch gekennzeichnet, daß die Reihe von Öffnungen (24) in einer am Umfang des Innenbehälters (3, 3') ansetzbaren Düsenleiste (25, 25a, 25b) vorgesehen ist.

2. Vorrichtung nach Anspruch 1, dadurch gekennzeichnet, daß die Düsenleiste (25, 25a, 25b) gerade ausgebildet und parallel zur Drehachse (19) der zylindrischen Behälter (1, 3, 3') eingesetzt ist.

3. Vorrichtung nach den Ansprüchen 1 und 2, dadurch gekennzeichnet, daß die Düsenleiste (25, 25a, 25b) in eine Nut (28, 28a) am Innenbehälter (3, 3') eingesetzt ist und mit ihrer an der offenen Seite der Nut (28) liegenden Außenkontur (25') dem Umfang des Innenbehälters (3, 3') angepaßt ist.

4. Vorrichtung nach Anspruch 3, dadurch gekennzeichnet, daß die Nut (28) parallele Wände besitzt und die Düsenleiste (25a) mit ihrer Außenkontur (25a') am Innenumfang des äußeren zylindrischen Behälters (1) gehalten ist.

5. Vorrichtung nach Anspruch 3, dadurch gekennzeichnet, daß die Nut (28) zu ihrer offenen Seite hin mit einem sich verengenden Wandteil (28a) versehen ist und daß die dem Querschnitt der Nut (28) angepaßte Düsenleiste (25) form schlüssig in der Nut (28) gehalten ist.

6. Vorrichtung nach Anspruch 5, dadurch gekennzeichnet, daß die Nut (28) T-förmigen Querschnitt besitzt und die Düsenleiste (25) diesem Querschnitt angepaßt ist.

7. Vorrichtung nach Anspruch 1, dadurch gekennzeichnet, daß die Düsenleiste (25b) mit einer Temperiereinrichtung (33) versehen ist.

8. Vorrichtung nach Anspruch 7, dadurch gekennzeichnet, daß die Temperiereinrichtung (33) beidseitig der Reihe von Öffnungen (24) angeordnet ist.

9. Vorrichtung nach den Ansprüchen 7 und 8, dadurch gekennzeichnet, daß die Düsenleiste (25b) mit einer Heizwendel (33) versehen ist, die U-förmig im Bereich der Öffnungen (24) verlegt ist.

10. Vorrichtung nach einem der Ansprüche 1 bis 9, dadurch gekennzeichnet, daß der Außenhälter (1) axial vom Innenbehälter (3, 3') abziehbar ist, so daß die Nut (28, 28a) zum Einsetzen der Düsenleiste (25, 25a, 25b) freigegeben ist.

## Revendications

1. Dispositif pour extruder des substances fluables à partir de deux récipients cylindriques, dont le premier est pourvu d'orifices sur sa périphérie et peut tourner autour de la paroi extérieure d'un récipient inférieur cylindrique dans lequel la substance extrudée est introduite axialement et tombe, au travers d'une rangée d'orifices qui, pendant la rotation relative des deux récipients cylindriques, coïncident cycliquement avec les orifices du récipient extérieur, sous forme de gouttes sur un transporteur ou bande de refroidissement, qui est placé en dessous d'elle, et qui se solidifie ou se gélifie sur celui-ci, caractérisé en ce que la rangée d'orifices (24) est ménagée dans une barre à buses (25, 25a, 25b) qui peut être fixée sur la périphérie du récipient intérieur (3, 3').

2. Dispositif selon la revendication 1, caractérisé en ce que la barre à buses (25, 25a, 25b) est droite et est insérée parallèlement à l'axe de rotation (19) du récipient cylindrique (1, 3, 3').

3. Dispositif selon les revendications 1 et 2, caractérisé en ce que la barre à buses (25, 25a, 25b) est insérée dans une rainure (28, 28a) du récipient intérieur (3, 3') et est réglée, avec son contour extérieur (25') situé sur le côté ouvert de la rainure (28), sur la périphérie du récipient intérieur (3, 3').

4. Dispositif selon la revendication 3, caractérisé en ce que la rainure (28) comporte des parois parallèles et la barre à buses (25a) est maintenue, par son contour extérieur (25a'), sur la circonférence intérieure du récipient cylindrique extérieur (1).

5. Dispositif selon la revendication 3, caractérisé en ce que la rainure (28) est pourvue d'une partie de paroi rétrécie (28a) en direction de son côté ouvert et en ce que la barre à buses (25), qui est ajustée en relation avec la section droite de la rainure (28), est maintenue avec conservation de forme dans la rainure (28).

6. Dispositif selon la revendication 5, caractérisé en ce que la rainure (28) a une section droite en forme de T et la barre à buses (25) est adaptée à cette section droite.

7. Dispositif selon la revendication 1, caractérisé en ce que la barre à buses (25b) est pourvue d'un dispositif de températion (33).

8. Dispositif selon la revendication 7, caractérisé en ce que le dispositif de températion (33) est placé sur les deux côtés de la rangée d'orifices (24).

9. Dispositif selon les revendications 7 et 8, caractérisé en ce que la barre à buses (25b) est pourvue d'un enroulement de chauffage (33) qui est placé avec un profil en forme de U dans la zone des orifices (24).

10. Dispositif selon une des revendications 1 à 9, caractérisé en ce que le récipient extérieur (1) peut être enlevé axialement du récipient intérieur (3, 3') de telle sorte que la rainure (28, 28a) soit dégagée pour l'insertion de la barre à buses (25, 25a, 25b).

FIG.1

FIG.2

FIG.2a

FIG.3

FIG.3a

0 145 839

FIG.4

3  20

22

3a

28b  23

FIG.5

3'

3'a

28

32  32

40

FIG.7

31

31  FIG.6

FIG.8

FIG.9

0 145 839